# EUROPÄISCHE PATENTSCHRIFT

(11) **EP 0 360 165 B1**
(45) Veröffentlichungstag und Bekanntmachung des Hinweises auf die Patenterteilung: **12.01.1994**
(21) Anmeldenummer: 89117092.0
(22) Anmeldetag: 15.09.1989
(51) Int. Cl.: H01S 3/108, H01S 3/082, H01S 3/30, G02F 1/35

(54) **Laseranordnung mit ein- und ausschaltbarer Frequenzkonversion**
Laser arrangement with switchable frequency conversion
Dispositif laser avec conversion de fréquence commutable

(30) Priorität: 28.04.1989 DE 3914070; 19.09.1988 DE 3831758
(43) Veröffentlichungstag der Anmeldung: 28.03.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Blumentritt, Martin, D-7923 Königsbronn (DE); Greve, Peter, Dr., D-7087 Essingen (DE); Rupp, Wolfgang, Dr., D-7080 Aalen (DE)

(56) Entgegenhaltungen:
- EP-A- 0 143 743
- US-A- 4 514 849
- US-A- 4 617 666
- IBM TECHNICAL DISCLOSURE BULLETIN, Band 16, Nr. 6, November 1973, Seiten 1804-1805, New York, US; J.E. SMITH, Jr.: "Laser system for measurements of gas concentrations in mixtures of gases"

## Beschreibung

Die vorliegende Erfindung betrifft eine Vorrichtung zur Konversion der Frequenz eines Laserstrahles mit einem nichtlinearen Element innerhalb eines Resonators, wobei der Strahlengang im Resonator durch ein optisches Element abgeknickt ist.

Die Frequenz eines Lasers läßt sich mit einem nichtlinearen Element konvertieren, z.B. verdoppeln. Aus der US-PS 4 618 957 ist eine Laseranordnung bekannt, bei welcher ein nichtlinearer Kristall zur Frequenzverdopplung in dem Resonator angeordnet ist. Der Resonator hat einen geknickten Strahlengang, wobei der Spiegel an der Knickstelle zur Auskopplung der Strahlung mit der doppelten Frequenz dient.

Diese bekannte Anordnung hat den Nachteil, daß sie nur Strahlung mit der doppelten Frequenz emittiert. Außerdem benötigt sie durch den abgeknickten Strahlengang eine verhältnismäßig breite Grundfläche.

Außer einer Frequenzverdopplung kann man mit nichtlinearen Elementen auch eine andere Konversion durchführen, z.B. eine Frequenzverdreifachung, oder eine Ramankonversion.

Der vorliegenden Erfindung liegt die Aufgabe zugrunde, eine Laseranordnung anzugeben, mit der wahlweise die Grundfrequenz oder die konvertierte Frequenz erzeugt werden kann und die trotzdem einen möglichst kompakten Aufbau hat.

Die gestellte Aufgabe wird erfindungsgemäß dadurch gelöst, daß das optische Element zur Abknickung des Strahlenganges in den Strahlengang ein- und ausklappbar ist, daß im ausgeklappten Zustand des ein- und ausklappbaren optischen Elementes das nichtlineare Element nicht im Strahlengang des Resonators ist, daß im eingeklappten Zustand des ein- und ausklappbaren optischen Elementes der Strahlengang im Resonator verändert ist und das nichtlineare Element und ein weiterer Endspiegel im Strahlengang des Resonators sind und daß der halbe Ablenkwinkel des optischen Elementes im eingeklappten Zustand kleiner als 15° ist.

In einer vorteilhaften Ausgestaltung der Erfindung ist ein zusätzliches optisches Element zur nochmaligen Abknickung des Strahlenganges im Resonator beim eingeklappten Zustand des ein- und ausklappbaren optischen Elementes vorgesehen, dessen halber Ablenkwinkel ebenfalls kleiner als 15° ist. Dadurch kommt der Resonatorteil für die Frequenzverdopplung parallel zum Resonatorteil für die Grundfrequenz und es wird eine besonders schlanke Ausführungsform erreicht.

In besonders vorteilhaften Ausführungsformen sind optische Mittel vorgesehen, durch welche die Achse des Strahles mit der konvertierten Frequenz in die Achse des Strahles mit der Grundfrequenz umgelenkt wird. Dadurch erhält man eine Laseranordnung, die durch Ein- und Ausklappen eines optischen Elementes zwei verschiedene Frequenzen in derselben optischen Achse emittiert.

Ein großer Vorteil der angegebenen Winkel für die Abknickungen des Strahlenganges ist, daß standardmäßige Spiegel bzw. Schichten auf optischen Bauteilen verwendet werden können, die leichter oder mit besseren Reflexions- bzw. Transmissionseigenschaften herstellbar sind als bei Umlenkungen um größere Winkel.

Weitere vorteilhafte Ausgestaltungen der Erfindung gehen aus den Unteransprüchen und der Beschreibung zu den Figuren hervor.

Die Erfindung wird im folgenden anhand von in den Figuren 1 bis 6 dargestellten Ausführungsbeispielen für Frequenzverdopplung näher erläutert. Dabei zeigen:
- Figur 1: ein Beispiel, bei welchem der Strahl mit der doppelten Frequenz in einer anderen Richtung emittiert wird als der Strahl mit der Grundfrequenz;
- Figur 2,3: Beispiele, bei welchen die Achse des Strahles mit der doppelten Frequenz in die Achse des Strahles mit der Grundfrequenz umgelenkt wird;
- Figur 4: ein Beispiel für einen besonders einfachen Aufbau, bei dem der Strahl mit der doppelten Frequenz dicht neben und parallel zum Strahl mit der Grundfrequenz emittiert wird;
- Figur 5,6: Beispiele, bei denen im Resonator für die doppelte Frequenz nur eine Abknickung des Strahlenganges erfolgt und zwar durch das ein- und ausklappbare optische Element.

In allen Figuren sind die Winkel (w,v) zugunsten einer besseren Übersichtlichkeit größer gezeichnet als bei zweckmäßigen Ausführungsformen.

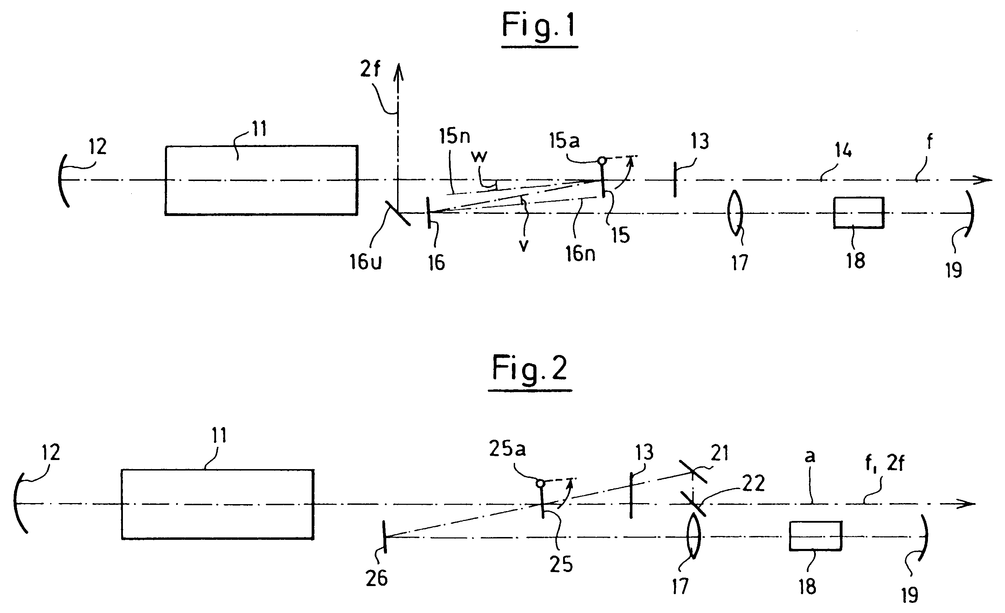

In Figur 1 ist mit (11) ein Laserkopf bezeichnet. Dieser besteht in bekannter Weise z.B. aus einem Nd:YAG-Kristall mit einer Pumplichtquelle und Kühleinrichtung. Der Laserkopf (11) bildet zusammen mit den Spiegeln (12) und (13) einen Resonator, aus welcher durch den Spiegel (13) ein Laserstrahl (14) mit der Grundfrequenz f austritt. Innerhalb des Resonators ist ein Spiegel (15) angeordnet, der um die Achse (15a) schwenkbar ist. In der gestrichelt gezeichneten Stellung befindet sich der Spiegel außerhalb des Strahlenganges und aus dem Resonator tritt ein Strahl mit der Grundfrequenz f aus.

Die Lagerung der Achse (15a) des Spiegels (15) ist zusammen mit einem Anschlag so ausgebildet, daß, wenn der Spiegel in den Strahlengang geklappt wird, er immer in eine vorher einmal justierte Lage kommt.

Wenn der Spiegel (15) in den Strahlengang eingeklappt ist, wird der Resonator von den Spiegeln (12) und (19) begrenzt, wobei die Spiegel (15) und (16) als Umlenkspiegel verwendet werden. In dem erweiterten Teil des Resonators befindet sich ein bekannter Frequenzverdopplerkristall (18), z.B. ein KTP-Kristall, oder ein anderes nichtlineares Element. Die Sammellinse (17) bewirkt in Verbindung mit dem Hohlspiegel (19) in bekannter Weise eine Erhöhung des Wirkungsgrades der Frequenzverdopplung. Die Auskopplung der Strahlung mit der doppelten Freqeunz erfolgt durch den Spiegel (16), der für die Strahlung mit der doppelten Frequenz eine möglichst große Transmission hat. Ein weiterer Umlenkspiegel (16u) bringt die Strahlung mit der doppelten Frequenz 2f in die gewünschte Richtung. Der Hohlspiegel (19) hat für beide Frequenzen ein möglichst großes Reflexionsvermögen.

Die Einfallswinkel (w,v) an den Spiegeln (15,16) zu den Spiegelnormalen (15n und 16n) sind möglichst klein, d.h. kleiner als 15°. Dadurch ergibt sich eine schlanke Bauform der gesamten Laseranordnung. Außerdem können standardmäßige Spiegel für senkrechten Einfall verwendet werden, die leichter oder mit besseren Reflexions- bzw. Transmissionseigenschaften hergestellt werden können als Spiegel für große Einfallswinkel.

In Figur 2 ist eine Ausführungsform dargestellt, bei welcher der Strahl mit der doppelten Frequenz exakt in die Achse des Strahles mit der Grundfrequenz umgelenkt wird. Hierfür ist der Spiegel (26) als reiner Reflexionsspiegel für beide Frequenzen ausgebildet. Der um die Achse (25a) umklappbare Spiegel (25) ist als Auskoppelspiegel für die doppelte Frequenz ausgebildet, d.h. er hat eine möglichst hohe Transmission für die doppelte Frequenz und eine möglichst hohe Reflexion für die Grundfrequenz. Mit den justierbaren Spiegeln (21) und (22) läßt sich der Strahl mit der doppelten Frequenz genau in die Achse (a) des Strahles mit der Grundfrequenz bringen. Beide Spiegel (21,22) haben ein möglichst hohes Reflexionsvermögen für die doppelte Frequenz; der Spiegel (22) hat zusätzlich eine hohe Transmission für die Grundfrequenz. Alle mit gleichen Bezugszeichen wie in der Figur 1 bezeichneten Elemente sind miteinander identisch. Der Auskoppelspiegel (13) für die Grundfrequenz muß in Figur 2 auch eine möglichst große Transmission für die doppelte Frequenz haben.

Die in Figur 2 dargestellte Anordnung hat z.B. den Vorteil, daß beide Frequenzen leicht in ein und dieselbe Faser eingekoppelt werden können.

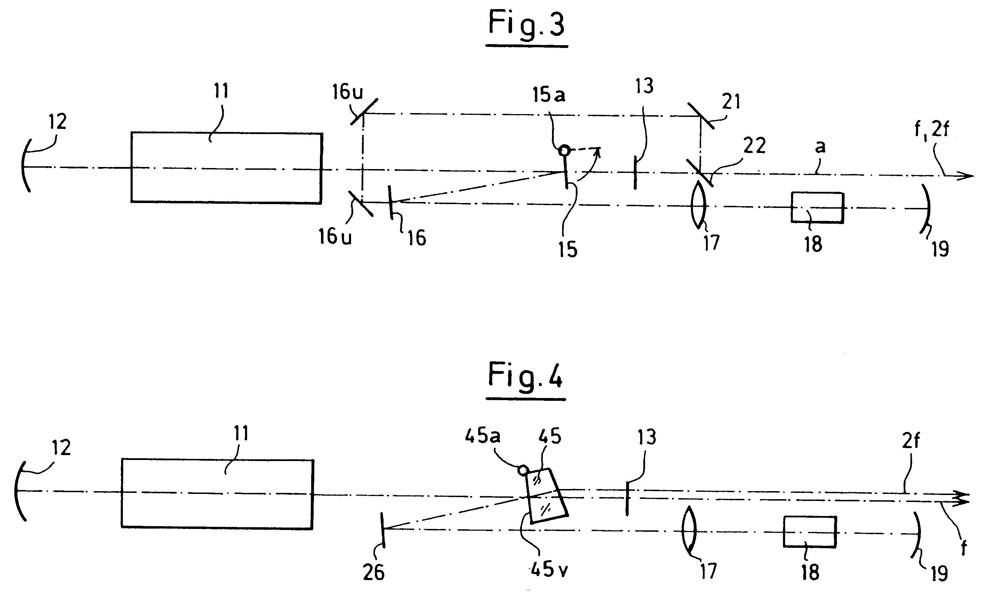

Figur 3 zeigt eine andere Ausführungsform für die Umlenkung des Strahles mit der doppelten Frequenz in die Achse des Strahles mit der Grundfrequenz. Mit gleichen Bezugszeichen wie in den Figuren 1 und 2 sind wieder identische Elemente bezeichnet. Der um die Achse (15a) schwenkbare Spiegel (15) dient wieder als Umschaltelement zwischen den beiden Frequenzen. Die doppelte Frequenz wird über den Spiegel (16) ausgekoppelt und über die beiden Umlenkspiegel (16u) sowie die justierbaren Spiegel (21,22) exakt in die Achse (a) der Strahlung mit der Grundfrequenz umgelenkt.

In Figur 4 erfolgt die Umschaltung der Frequenzen mit einem Prisma (45), das um die Achse (45a) in den Strahlengang reproduzierbar eingeschwenkt wird, wenn die doppelte Frequenz emittiert werden soll. Die Vorderseite (45v) des Prismas ist mit einer Schicht versehen, die für Grundfrequenz hochreflektierend und für die doppelte Frequenz möglichst durchlässig ist. Durch die Keilform des Prismas (45) wird erreicht, daß der Strahl mit der doppelten Frequenz parallel zur Achse des Strahles mit der Grundfrequenz austritt. Der geringe Strahlversatz zwischen diesen beiden Achsen, von z.B. 1mm, kann durch eine ebenfalls in den Strahlengang für die doppelte Frequenz einklappbare Planparallelplatte rückgängig gemacht werden.

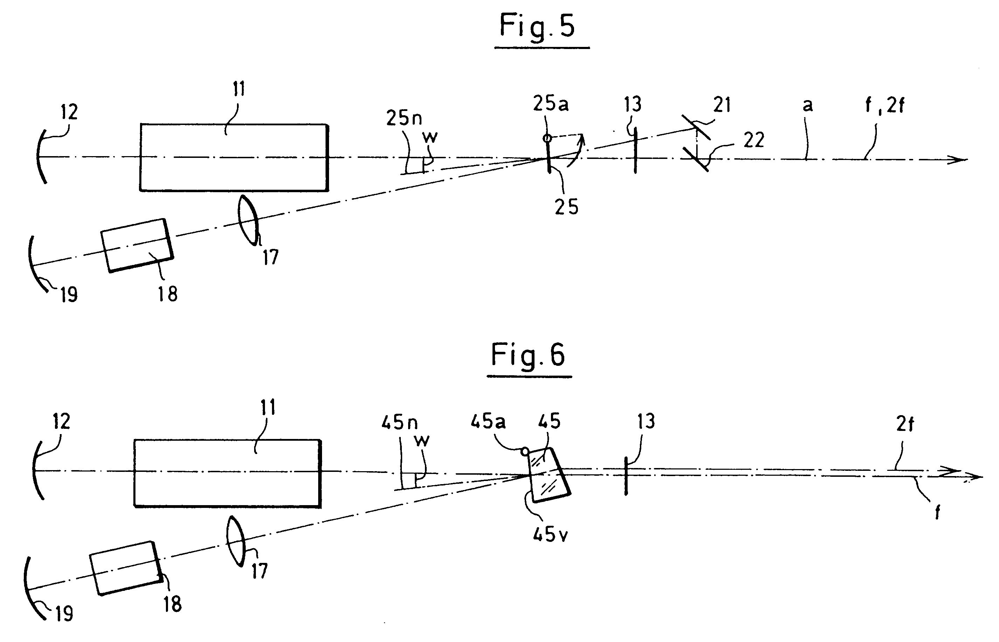

In Figur 5 wird der gleiche in den Strahlengang einklappbare Spiegel (25) verwendet wie in Figur 2. Es erfolgt jedoch keine nochmalige Abknickung des Strahlenganges im Resonator, sondern KTP-Kristall (18), Endspiegel (19) und Linse (17) sitzen auf der gleichen Seite wie der Laserkopf (11). Bei geeigneter konstruktiver Ausbildung kann der Einfallswinkel (w) am Spiegel (25) trotzdem ausreichend klein gemacht werden, z.B. 4^{o}. Ebenso wie bei Figur 2 wird der Strahl mit der doppelten Frequenz durch den Spiegel (25) ausgekoppelt und die Spiegel (21) und (22) genau in die Achse (a) des Strahles mit der Grundfrequenz gebracht.

In Figur 6 wird das gleiche in den Strahlengang einklappbare Prisma (45) wie in Figur 4 verwendet und es erfolgt ebenfalls keine nochmalige Abknickung des Strahlenganges. Der Strahl mit der doppelten Frequenz wird wieder durch die Keilform des Prismas parallel zur Achse des Strahles mit der Grundfrequenz umgelenkt. Auch hier kann der geringe Strahlversatz zwischen diesen beiden Achsen durch eine in den Strahlengang für die doppelte Frequenz einklappbare Planparallelplatte rückgängig gemacht werden.

In allen Ausführungsbeispielen kann der Laserkopf ein Dauerstrichlaser (continous wave laser) oder ein gepulster Laser sein. Wenn ein Dauerstrichlaser verwendet wird, kann durch einen akusto- oder elektrooptischen Modulator in der Resonatorkammer die mittlere Leistung der konvertierten Strahlung erhöht werden.

Wenn eine Frequenzverdreifachung oder Ramankonversion erfolgen soll, können die in den Figuren 1 bis 6 dargestellten Ausführungsbeispiele ebenfalls verwendet werden, mit dem einzigen Unterschied, daß an der Stelle des KTP-Kristalles (18) für die Frequenzverdreifachung z.B. ein bekannter BBO-Kristall und für die Ramankonversion z.B. eine bekannte Methangasdruckzelle oder ein bekannter LiNbO₃-Kristall angeordnet wird.

## Patentansprüche

1. Vorrichtung zur Konversion der Frequenz eines Laserstrahles mit einem nichtlinearen Element (18) innerhalb eines Resonators, wobei der Strahlengang im Resonator durch ein optisches Element (15) abgeknickt ist, dadurch gekennzeichnet, daß das optische Element (15) zur Abknickung des Strahlenganges in den Strahlengang ein- und ausklappbar ist, daß im ausgeklappten Zustand des ein- und ausklappbaren optischen Elementes (15,25,45) das nichtlineare Element (18) nicht im Strahlengang des Resonators ist, daß im eingeklappten Zustand des ein- und ausklappbaren optischen Elementes (15,25,45) der Strahlengang im Resonator verändert ist und das nichtlineare Element (18) und ein weiterer Endspiegel (19) im Strahlengang des Resonators sind und daß der halbe Ablenkwinkel (w) des optischen Elementes (15) im eingeklappten Zustand kleiner also 15° ist.

2. Vorrichtung nach Anspruch 1, dadurch gekennzeichnet, daß ein zusätzliches optisches Element (16,26) zur nochmaligen Abknickung des Strahlenganges im Resonator beim eingeklappten Zustand des ein- und ausklappbaren optischen Elementes (15,25,45) vorgesehen ist, dessen halber Ablenkwinkel (v) kleiner als 15° ist.

3. Vorrichtung nach Anspruch 1 oder 2, dadurch gekennzeichnet, daß optische Mittel (16u,21,22) vorgesehen sind, durch welche die Achse des Strahles mit der konvertierten Frequenz in die Achse (a) des Strahles mit der Grundfrequenz umgelenkt wird.

4. Vorrichtung nach Anspruch 1 oder 2, dadurch gekennzeichnet, daß optische Mittel (45) vorgesehen sind, durch welche die Achse des Strahles mit der konvertierten Frequenz parallel zur Achse (a) des Strahles mit der Grundfrequenz umgelenkt wird.

5. Vorrichtung nach Anspruch 1 bis 3, dadurch gekennzeichnet, daß die halben Ablenkwinkel (w,v) gleich 4^{o} sind.

6. Vorrichtung nach einem der Ansprüche 1 bis 5, dadurch gekennzeichnet, daß im Resonator ein Dauerstrichlaser (cw-Laser) als Laserkopf (11) angeordnet ist.

7. Vorrichtung nach einem der Ansprüche 1 bis 5, dadurch gekennzeichnet, daß im Resonator ein gepulster Laser als Laserkopf (11) angeordnet ist.

8. Vorrichtung nach Anspruch 6, dadurch gekennzeichnet, daß im Resonator ein akusto- oder elektrooptischer Modulator angeordnet ist.

## Claims

1. Arrangement for converting the frequency of a laser beam with a nonlinear element (18) within a resonator, where the beam path within the resonator is deflected by an optical element (15) characterised in that the optical element (15) is pivotable into and out of the beam path, that in the state, where the optical element (15, 25, 45) is pivoted out, the non-linear element (18) is situated off the beam path of the resonator, that in the state, where the optical element (15, 25, 45) is pivoted into, the beam path within the resonator is changed and the nonlinear element (18) and a further end mirror (19) are within the beam path of the resonator and that the half angle of deflection (w) of the optical element (15) is less than 15° in the pivoted into state.

2. Arrangement according to claim 1 characterised in that an additional optical element (16, 26) is provided for an additional deflection of the beam path within the resonator in the pivoted into state of the pivotable optical element (15, 25, 45), the half angle of deflection (v) of the additional optical element being less than 15°.

3. Arrangement according to claim 1 or 2 characterised in that optical means (16u, 21, 22) are provided, which deflect the axis of the beam with the converted frequency into the axis (a) of the beam with the basic frequency.

4. Arrangement according to claim 1 or 2 characterised in that optical means (45) are provided, which deflect the axis of the beam with the converted frequency to be parallel with the axis (a) of the beam with the basic frequency.

5. Arrangement according to claim 1 to 3 characterised in that the half angles of deflection (w, v) are equal to 4°.

6. Arrangement according to one of the claims 1 to 5 characterised in that a continuous wave laser (cw-laser) is arranged in the resonator as a laser head (11).

7. Arrangement according to one of the claims 1 to 5 characterised in that a pulsed laser is arranged in the resonator as a laser head (11).

8. Arrangement according to claim 6 characterised in that an acousto - or electrooptical modulator is arranged in the resonator.

## Revendications

1. Dispositif pour convertir la fréquence d'un faisceau laser, comportant un élément non linéaire (18) situé à l'intérieur d'un résonateur, le trajet du rayonnement étant coudé dans le résonateur au moyen d'un élément optique (15), caractérisé en ce que l'élément optique (15) servant à couder le trajet du rayonnement peut être rabattu dans le trajet du rayonnement ou en être écarté par pivotement, que, lorsque l'élément optique (15,25,45), qui peut être rabattu et écarté, est dans sa position écartée, l'élément non linéaire (18) n'est pas situé dans le trajet du rayonnement du résonateur, que lorsque l'élément optique (15,25,45), qui peut être rabattu ou écarté est dans sa position écartée, le trajet du rayonnement dans le résonateur est modifié et l'élément non linéaire (18) et un autre miroir d'extrémité (19) sont situés dans le trajet du rayonnement du résonateur et que le demi-angle de déviation (w) de l'élément optique (15) dans sa position écartée est inférieur à 15°.

2. Dispositif selon la revendication 1, caractérisé en ce qu'il est prévu un élément optique supplémentaire (16,26) servant à réaliser une déviation supplémentaire du trajet du rayonnement dans le résonateur, lorsque l'élément optique (15,25,45), qui peut être rabattu ou écarté, est dans sa position écartée, son demi-angle de déviation (v) est inférieur à 15°.

3. Dispositif selon la revendication 1 ou 2, caractérisé en ce qu'il est prévu des moyens optiques (16u,21,22), grâce auxquels l'axe du faisceau possédant la fréquence convertie est amené par déviation à coïncider avec l'axe (a) du faisceau possédant la fréquence de base.

4. Dispositif selon la revendication 1 ou 2, caractérisé en ce qu'il est prévu des moyens optiques (45), grâce auxquels l'axe du faisceau possédant la fréquence convertie est amené par déviation dans une position parallèle à l'axe (a) du faisceau possédant la fréquence de base.

5. Dispositif selon les revendications 1 à 3, caractérisé en ce que le demi-angle de déviation (w,v) est égal à 4°.

6. Dispositif selon l'une des revendications 1 à 5, caractérisé en ce qu'un laser à ondes entretenues (laser CW) est prévu en tant que tête laser (11) dans le résonateur.

7. Dispositif selon l'une des revendications 1 à 5, caractérisé en ce qu'un laser pulsé est disposé, en tant que tête laser (11), dans le résonateur.

8. Dispositif selon la revendication 6, caractérisé en ce qu'un modulateur acousto-optique ou électro-optique est disposé dans le résonateur.
